# EUROPÄISCHE PATENTSCHRIFT

(11) **EP 1 687 550 B1**
(45) Veröffentlichungstag und Bekanntmachung des Hinweises auf die Patenterteilung: **29.07.2009**
(21) Anmeldenummer: 04803338.5
(22) Anmeldetag: 29.11.2004
(51) Int. Cl.: F16F 13/08

(54) **HYDROLAGER**
HYDRAULIC MOUNT
SUPPORT HYDRAULIQUE

(30) Priorität: 27.11.2003 DE 10355501
(43) Veröffentlichungstag der Anmeldung: 09.08.2006
(73) Patentinhaber: Carl Freudenberg KG, 69469 Weinheim (DE)
(72) Erfinder: MÜHLEMEIER, Jochen, 85221 Dachau (DE); LODERER, Dirk, Bedford, NH 03110 (US); PACHTA, Jiri, 69514 Laudenbach (DE)
(74) Vertreter: Ripper, Monika Sigrid
(86) Internationale Anmeldenummer: PCT/EP2004/013527
(87) Internationale Veröffentlichungsnummer: WO 2005/052407

(56) Entgegenhaltungen:
- DE-A1- 4 324 832
- US-A- 5 215 293
- US-A1- 2003 025 255

## Beschreibung

Die Erfindung betrifft ein Hydrolager, umfassend ein Traglager und ein Auflager, die durch einen Federkörper aus gummielastischem Werkstoff aufeinander abgestützt sind, wobei der Federkörper einen mit Dämpfungsflüssigkeit gefüllten Arbeitsraum begrenzt.

### Stand der Technik

Solche Hydrolager sind allgemein bekannt, beispielsweise aus der EP 0 547 287 B1. Der Federkörper der vorbekannten Hydrolager besteht zumeist aus Naturkautschuk oder aus Ethylen/Propylen-Dien-Terpolymer (EPDM), wobei die zuvor genannten Werkstoffe bis maximal etwa 150°C temperaturbeständig sind. Eine Beaufschlagung dieser Werkstoffe mit Temperaturen oberhalb von 150°C führt zu nachteilig veränderten Gebrauchseigenschaften und/oder zu einer Zerstörung des Werkstoffs.
Speziell dann, wenn Hydrolager in modernen Kraftfahrzeugen als Motorlager zur Anwendung gelangen, ist die zuvor genannte Temperaturbeständigkeit zu gering. In modernen Kraftfahrzeugen sind die Motorräume häufig weitgehend gekapselt, um Schallemissionen aus dem Motorraum in die Umgebung möglichst effizient zu reduzieren. Außerdem werden Motorräume immer kleiner, um zunehmend höhere Anforderungen an die Aerodynamik von Kraftfahrzeugen erfüllen zu können. Aus diesen Gründen werden hohe Temperaturen nur unzureichend vom Hydrolager ferngehalten und an die Umgebung des Motorraums abgeführt.

Wärme-Abschirmbleche, die zum Schutz von Hydrolagern zur Anwendung gelangen, sind wenig zufriedenstellend, da diese zusätzlichen Einbauraum benötigen und durch ihre separate Herstellung zusätzliche Kosten verursachen.

### Darstellung der Erfindung

Der Erfindung liegt die Aufgabe zugrunde, ein Hydrolager der eingangs genannten Art derart weiterzuentwickeln, dass es ohne Beeinträchtigung seiner Gebrauchseigenschaften und/oder seiner Lebensdauer mit Temperaturen deutlich oberhalb von 150°C unmittelbar beaufschlagbar ist und im Vergleich zu üblichen Hydrolagern aus dem Stand der Technik keine vergrößerten Abmessungen aufweist.

Diese Aufgabe wird erfindungsgemäß durch ein Hydrolager gemäß Anspruch 1 gelöst. Auf vorteilhafte Ausgestaltungen nehmen die Unteransprüche Bezug.

Zur Lösung der Aufgabe ist es vorgesehen, dass der Federkörper aus hochtemperaturbeständigem Werkstoff, Silikon-Elastomer besteht und mit einem Polyalkylenglykol mit einer mittleren Molmasse von etwa 120 bis 20 000 g/mol und einer Temperaturbeständigkeit von -40°C bis 150°C befüllt ist. Die erforderliche Temperatur- und Alterungsstabilität des Polyalkylenglykols wird durch Zugabe von etwa 0,5 bis 5 Gewichtsprozent eines Antioxidatant-Additivs erreicht. Als Antioxidant-Additiv werden eingesetzt ein alkyliertes, sekundäres aromatisches Amin entsprechend der allgemeinen Formel 1 oder ein sterisch gehindertes Phenolderivat entsprechend der allgemeinen Formel 2 oder eine Kombination aus beiden.

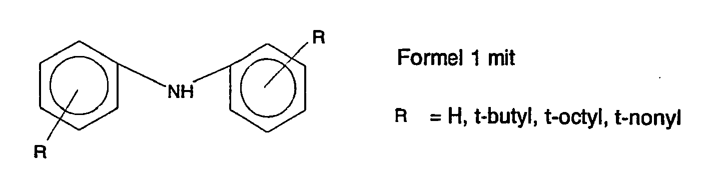

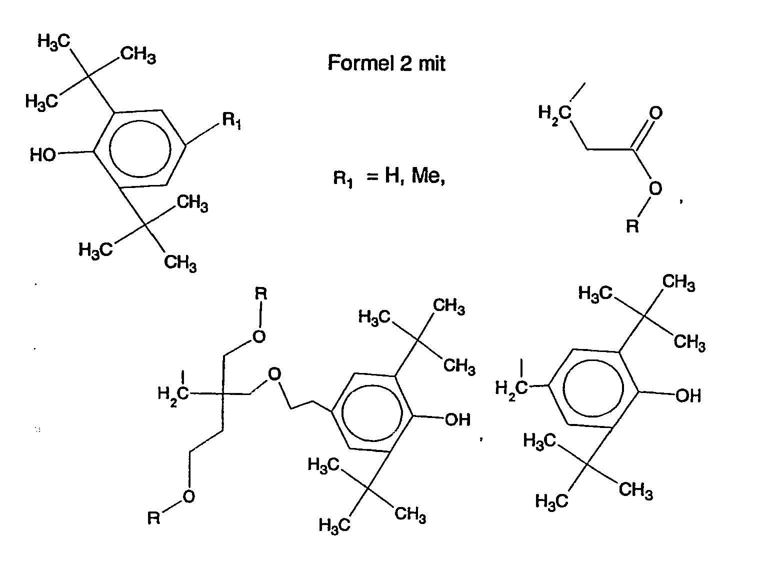

Ein Federkörper aus Silikon ist im Vergleich zu einem Federkörper, der beispielsweise aus EPDM besteht mit deutlich höheren Temperaturen beaufschlagbar, ohne dass seine Gebrauchseigenschaften nachteilig beeinflusst und/oder seine Lebensdauer verkürzt würde. Durch den aus Silikon bestehenden Federkörper ist das erfindungsgemäße Hydrolager problemlos mit Temperaturen im Bereich von bis zu 200°C beaufschlagbar und daher prädestiniert für die Anwendung als Motorlager in sehr kompakten und/oder vollgekapselten Motorräumen. Bei der Dämpfungsflüssigkeit handelt es sich meist um ein Gemisch aus Glykol und Wasser. Dieses Gemisch würde in Oberflächen von Silikonfederkörpern eindringen und während der Gebrauchsdauer durch diese hindurchdiffundieren.
Die Anwendung spezieller Silikonmischungen zur Vermeidung dieser Probleme ist in wirtschaftlicher Hinsicht wenig zufriedenstellend.

Der Federkörper kann, wie bei herkömmlichen Hydrolagern üblich, im wesentlichen kegelstumpfförmig ausgebildet sein. Die Gestaltung und/oder die Dimensionierung des Federkörpers kann der mit der Konstruktion von Hydrolagern betraute Fachmann an die jeweiligen Gegebenheiten des Anwendungsfalles anpassen, ohne erfinderisch tätig zu werden. Hinsichtlich der Ausgestaltung und/oder der Dimensionierung ergeben sich zwischen EPDM-Federkörpern und Silikon-Federkörpern keine gravierenden Unterschiede, so dass Geometrien von bewährten EPDM-Federkörpern im Wesentlichen unverändert auf Federkörper aus Silikon übertragbar sind.

Bevorzugt besteht das Polyalkylenglykol aus Ethylenoxid- und Propylenoxideinheiten im Molverhältnis von 5 : 1 bis 1 : 5. Hierbei ist von Vorteil, dass es im Vergleich zu einer einer bekannten Dämpfungsflüssigkeit, eine höhere Temperaturbeständigkeit aufweist und deshalb das gesamte Hydrolager mit höheren Temperaturen beaufschlagbar ist. Der Federkörper bewirkt die guten Gebrauchseigenschaften des Hydrolagers hinsichtlich einer guten Temperaturbeständigkeit und eines vorteilhaften Federverhaltens. Die erfindungsgemäße Dämpfungsflüssigkeit gewährleistet eine ausreichende Beständigkeit des Federkörpers.

### Kurzbeschreibung der Zeichnung

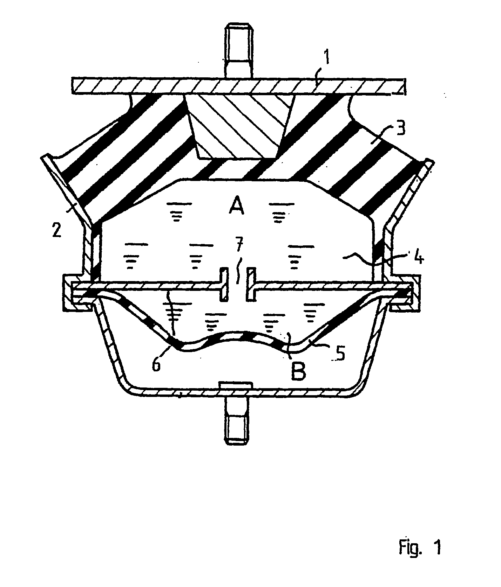

Ein Ausführungsbeispiel des erfindungsgemäßen Hydrolagers ist nachfolgend anhand der Figur 1 näher beschrieben. Diese zeigt in schematischer Darstellung: einen Querschnitt durch ein Hydrolager.

### Ausführung der Erfindung

In Figur 1 ist ein Hydrolager gezeigt, das in seinem generellen Aufbau im Wesentlichen üblichen Hydrolagern entspricht.
Das Hydrolager umfasst ein Traglager 1 und ein Auflager 2, die durch den Federkörper 3 aufeinander abgestützt sind. Das Traglager 1, das Auflager 2 und eine den Ausgleichsraum B abschließende, im Wesentlichen drucklos Volumen aufnehmende Membran 5 begrenzen den Arbeitsraum A und den Ausgleichsraum B, die jeweils mit Dämpfungsflüssigkeit 4 gefüllt und durch eine Trennwand 6 voneinander getrennt sind. Die Trennwand 6 besteht in dem hier gezeigten Ausführungsbeispiel aus einem Dämpfungskanal 7, wobei die Membran 5 in Richtung der eingeleiteten Schwingungen schwingfähig angeordnet ist.

Zur Dämpfung tieffrequenter, großamplitudiger Schwingungen, wird die Flüssigkeitssäule aus Dämpfungsflüssigkeit 4, die sich innerhalb des Dämpfungskanals 7 befindet, zwischen dem Arbeits- A und dem Ausgleichsraum B gegenphasig zu den eingeleiteten Schwingungen hin- und her verlagert. Die Ausgestaltung der Trennwand 6 kann dabei beliebig sein und den aus dem Stand der Technik hinlänglich bekannten Trennwänden von Hydrolagern entsprechen. Der Federkörper 3 besteht aus Silikon.

Die dem Arbeitsraum A zugewandte Oberfläche des Federkörpers 3 wird mit Dämpfungsflüssigkeit 4 benetzt, womit unerwünschte Geräusche während des Betriebs des Hydrolagers ausgeschlossen sind.

Der erfindungswesentliche Vorteil des beanspruchten Hydrolagers ist darin zu sehen, dass es durch den aus Silikon bestehenden Federkörper 3 von außen mit hohen Temperaturen im Bereich von bis zu 200°C, beispielsweise aus dem Motorraum eines Kraftfahrzeugs beaufschlagbar ist und dass der aus Silikon bestehende Federkörper 3 von der Dämpfungsflüssigkeit 4 weder angegriffen noch durchdrungen wird. Das Hydrolager ist daher kostengünstig herstellbar.

## Patentansprüche

1. Hydrolager, umfassend ein Traglager und ein Auflager, die durch einen Federkörper aus gummielastischem Werkstoff aufeinander abgestützt sind, wobei der Federkörper einen mit Dämpfungsflüssigkeit gefüllten Arbeitsraum begrenzt, **dadurch gekennzeichnet, dass** der Federkörper (3) aus einem Werkstoff mit einer Temperaturbeständigkeit von bis zu 200°C besteht und mit einem Polyalkylenglykol mit einer mittleren Molmasse von etwa 120 bis 20 000 g/mol und einer Temperaturbeständigkeit von -40°C bis 150°C als Dämpfungsflüssigkeit befüllt ist, wobei
der Federkörper (3) aus Silikon-Elastomer besteht.

2. Hydrolager nach Anspruch 1, **dadurch gekennzeichnet, dass** der Federkörper (3) im Wesentlichen kegelstumpfförmig ausgebildet ist.

3. Hydrolager nach einem der Ansprüche 1 bis 2, **dadurch gekennzeichnet, dass** die Dämpfungsflüssigkeit ein Polyalkylenglykol aus Ethylenoxid- und Propylenoxideinheiten im Molverhältnis von 5 : 1 bis 1 : 5 ist.

4. Hydrolager nach einem der Ansprüche 1 bis 2, **dadurch gekennzeichnet, dass** die Dämpfungsflüssigkeit ein Polyalkylenglykol aus Ethylenoxid- und Propylenoxideinheiten im Molverhältnis von 2 : 1 bis 1 : 2 ist.

## Claims

1. Hydraulic mount, comprising a carrying bearing and a bearer which are supported one on the other by means of a spring body consisting of elastomeric material, the spring body delimiting a working space filled with damping fluid, **characterized in that** the spring body (3) consists of a material having a temperature resistance of up to 200°C and is filled with a polyalkyleneglycol having a molar mass of about 120 to 20 000 g/mol and a temperature resistance of -40°C to 150°C as damping fluid, the spring body (3) consisting of silicone elastomer.

2. Hydraulic mount according to Claim 1, **characterized in that** the spring body (3) is an essentially frustoconical design.

3. Hydraulic mount according to either one of Claims 1 and 2, **characterized in that** the damping fluid is a polyalkyleneglycol consisting of ethylene oxide and propylene oxide units in a molar ratio of 5:1 to 1:5.

4. Hydraulic mount according to either one of Claims 1 and 2, **characterized in that** the damping fluid is a polyalkyleneglycol consisting of ethylene oxide and propylene oxide units in a molar ratio of 2:1 to 1:2.

## Revendications

1. Palier hydraulique comprenant un palier de support et un appui, lesquels s'appuient l'un sur l'autre par l'intermédiaire d'un corps de ressort en matériau à élasticité caoutchouteuse, ledit corps de ressort limitant une chambre de travail remplie d'un liquide d'amortissement, **caractérisé en ce que** le corps de ressort (3) est constitué d'un matériau possédant une résistance thermique allant jusqu'à 200 °C et rempli d'un polyalkylèneglycol doté d'une masse molaire moyenne d'environ 120 à 20 000 g/mol et d'une résistance thermique comprise entre -40 °C et 150 °C et servant de liquide d'amortissement, le corps de ressort (3) étant constitué d'un élastomère de silicone.

2. Palier hydraulique selon la revendication 1, **caractérisé en ce que** le corps de ressort (3) est essentiellement réalisé en forme de cône tronqué.

3. Palier hydraulique selon l'une des revendications 1 à 2, **caractérisé en ce que** le liquide d'amortissement est un polyalkylèneglycol constitué d'unités d'oxyde d'éthylène et d'oxyde de propylène dans un rapport molaire compris entre 5 : 1 et 1 : 5.

4. Palier hydraulique selon l'une des revendications 1 à 2, **caractérisé en ce que** le liquide d'amortissement est un polyalkylèneglycol constitué d'unités d'oxyde d'éthylène et d'oxyde de propylène dans un rapport molaire compris entre 2 : 1 et 7. 2.
